Europäisches Patentamt

European Patent Office

Office européen des brevets

(11) Veröffentlichungsnummer: **0 212 243**
**B1**

(12) **EUROPÄISCHE PATENTSCHRIFT**

(45) Veröffentlichungstag der Patentschrift:
12.07.89

(51) Int. Cl.⁴: **F01N 3/28**

(21) Anmeldenummer: 86109625.3

(22) Anmeldetag: 14.07.86

(54) Halterung für einen metallischen Abgaskatalysatorträgerkörper und Verfahren zur Herstellung.

(30) Priorität: 25.07.85 DE 3526681

(43) Veröffentlichungstag der Anmeldung:
04.03.87 Patentblatt 87/10

(45) Bekanntmachung des Hinweises auf die Patenterteilung:
12.07.89 Patentblatt 89/28

(84) Benannte Vertragsstaaten:
AT BE CH DE FR GB IT LI LU NL SE

(56) Entgegenhaltungen:
DE-A- 2 302 746
DE-A- 2 407 263
DE-A- 2 746 475
DE-B- 1 192 624
FR-A- 2 209 399
US-A- 3 841 839
US-A- 4 285 909

(73) Patentinhaber: INTERATOM Gesellschaft mit
beschränkter Haftung, Friedrich-Ebert-Strasse,
D-5060 Bergisch-Gladbach 1(DE)

(72) Erfinder: Cyron, Theodor, Kurt-Schumacher-Strasse 12,
D-5060 Bergisch Gladbach(DE)
Erfinder: Maus, Wolfgang, Dipl.-Ing., Gut Horst,
D-5060 Bergisch Gladbach 1(DE)

(74) Vertreter: Mehl, Ernst, Dipl.-Ing. et al, Postfach 22 13 17,
D-8000 München 22(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft eine Halterung für einen metallischen Abgaskatalysatorträgerkörper nach dem Oberbegriff des Anspruchs 1.

Metallische Abgaskatalysatorträgerkörper sind beispielsweise aus der DE-A 2 924 592 oder in weiter entwickelter Form aus der DE-A 3 312 944 bekannt.

Solche Abgaskatalysatorträgerkörper werden mit einem Katalysatormaterial beschichtet, welches eine Entgiftung von Abgasen bewirkt. Im Betriebszustand sind die Katalysatorträgerkörper über lange Zeiträume hohen Temperaturen und auch Wechselbelastungen ausgesetzt. Außerdem müssen sie aus hochtemperaturfesten, und wenig korrosionsanfälligen Stahllegierungen hergestellt werden.

Beim Einbau solcher Katalysatorträgerkörper in Kraftfahrzeugabgassystemen stellt die Halterung der Körper ein besonderes Problem dar. Sie müssen in ein stabiles Gehäuse, z.B. ein Mantelrohr, eingebaut und gegebenenfalls noch thermisch isoliert werden. Dabei kommt es zu Problemen, da die Trägerkörper bei hoher Temperatur mit zunehmender Betriebsdauer eine Ausdehnung vor allem in Längsrichtung erfahren. Wird diese Ausdehnung behindert, beispielsweise durch feste Verbindungen zum Mantelrohr in mehr als einer Zone entlang der axialen Länge, so führt dies zu einer fortschreitenden Zerstörung der Mantelzone des Trägerkörpers bis zu seiner Ablösung vom Mantel. Außerdem verschlechtert sich das an sich gute Anspringverhalten des Katalysators mit metallischem Trägerkörper, wenn in der Startphase zunächst das dicke Mantelrohr mit aufgeheizt werden muß.

Aus der DE-A 2 746 475 ist eine Halterung eines Trägerkörpers mit einem um den Trägerkörper geschlungenen Spannband bekannt, dessen Enden an einem Gehäusemantel unter Vorspannung befestigt sind. Diese Halterung ist zwar vorteilhaft in bezug auf axiale und radiale Dehnungen des Trägerkörpers, jedoch ist die quasi punktuelle Befestigung nicht stabil gegen Schwingungen und mechanische Belastungen bei Erschütterungen im Betrieb.

Aus der DE-A 2 302 746, insbesondere Figuren 4 und 6 ist weiter eine Halterung für Abgaskatalysatorträgerkörper mittels zwei Distanzhaltern bekannt, welche den Körper mit Abstand vom Gehäuse festhalten. Diese Halterung läßt keine Längendehnung des Katalysatorträgerkörpers ohne Zerstörung der Halterung zu, da beide Distanzhalter jeweils sowohl mit dem Katalysatorträgerkörper wie auch mit dem Gehäuse fest verbunden sind.

Aufgabe der vorliegenden Erfindung ist eine Halterung für einen metallischen Abgaskatalysatorträgerkörper, welche diese Nachteile verringert und eine möglichst lange Lebensdauer des Trägerkörpers ermöglicht, aber trotzdem kostengünstig und einfach herstellbar ist. Ferner soll ein Verfahren zur Herstellung einer solchen Halterung angegeben werden.

Zur Lösung dieser Aufgabe wird eine Halterung mit den kennzeichnenden Merkmalen des Anspruchs 1 vorgeschlagen. Vorteilhafte Ausgestaltungen sowie ein Verfahren zur Herstellung einer solchen Halterung sind in den Ansprüchen 2 bis 7 bzw. 8 angegeben.

Die erfindungsgemäße Einbettung eines Katalysatorträgerkörpers in einem Mantelrohr ohne Behinderung seiner Längendehnung vermindert ganz entscheidend die mechanische Belastung während seiner Lebensdauer und während der einzelnen Betriebszyklen. Im Zusammenhang mit dieser Maßnahme kann, wie gegebenenfalls auch gesondert, ein weiterer Vorteil erreicht werden, nämlich eine weitgehende Wärmeisolierung zwischen Katalysatorträgerkörper und Mantelrohr. Je weniger feste metallische Brücken zwischen diesen beiden Teilen bestehen, bzw. je geringer die Wärmeleitfähigkeit solcher Brücken ist, desto schneller heizt sich einerseits der Katalysatorträgerkörper zu Betriebsbeginn auf, da weniger an den dicken Mantel übertragen wird, andererseits liegen die Betriebstemperaturen des Mantels insgesamt niedriger, weshalb außenliegende Wärmeisolierungen verringert oder ganz weggelassen werden können.

Wichtig ist dabei, daß der Katalysatorträgerkörper mittels Distanzhaltern in einem Abstand von einigen Millimetern innerhalb des Mantelrohres gehaltert sein soll. Dies ermöglicht, insbesondere in Verbindung mit in den weiteren Ansprüchen beschriebenen Ausgestaltungen, eine im Hinblick auf die Wärmeisolierung und die freie Längendehnung besonders günstige Halterung, wie anhand der Zeichnung näher erläutert wird. Der zwischen Katalysatorträgerkörper und Mantelrohr gebildete Zwischenraum kann mit verschiedenen hochtemperaturfesten Wärmeisoliermaterialien ausgefüllt werden. So eignen sich einerseits die bei manchen Halterungen für keramische Katalysatorträgerkörper verwendeten keramischen Fasermatten, andererseits können aber auch die gemäß der vorliegenden Erfindung vorgeschlagenen hochtemperaturfesten, rieselfähigen Granulate oder Pulver verwendet werden. Geeignet ist z.B. feiner Quarzsand. Bei waagerechtem Einbau des Katalysator-Trägerkörpers rüttelt sich ein rieselfähiges Material immer wieder fest, auch wenn der Katalysatorträgerkörper Dehnungen und andere Bewegungen ausführt, Auf diese Weise wird jede Schwingungsneigung gedämpft und der Trägerkörper sicher und langlebig gelagert. Falls sich das Volumen des Zwischenraumes vergrößern sollte, so rieselt das Material dennoch immer nach unten und verhindert, daß der Trägerkörper innerhalb des Mantelrohres in radialer Richtung hin- und herschlagen kann. Durch geeignete Ausformung der Distanzhalter als Dichtlippen und durch Verwendung von zusätzlichen Stegen, die jedoch keine Wärmebrücken bilden sollen, kann eine unerwünschte Verlagerung des Katalysatorträgerkörpers innerhalb des Mantelrohres verhindert werden. Ferner kann durch Verwendung von metallischem Siebgewebe für die Distanzhalter und/oder die Stege die Wärmeleitfähigkeit dieser Brücken weiter reduziert werden.

In Anspruch 8 wird schließlich ein geeignetes Verfahren zur Herstellung eines erfindungsgemäß gehalterten Katalysatorträgerkörpers beispielhaft beschrieben. Danach werden zunächst die kragenförmigen Distanzhalter auf den Katalysatorträgerkörper aufgeschoben und an diesem befestigt, vorzugsweise durch Löten, Schweißen, Laserschweißen oder vergleichbare Verbindungstechniken. Anschließend wird der Katalysatorträgerkörper mit den Distanzhaltern in der Richtung, in der die Distanzhalter dies problemlos zulassen, in ein Mantelrohr geschoben, wobei durch eine Rieselvorrichtung der Zwischenraum zwischen Katalysatorträgerkörper und Mantelrohr mit einem rieselfähigen, hochtemperaturfesten Granulat oder Pulver gefüllt wird. Die Rieselvorrichtung kann beispielsweise aus einem trichterförmigen Kragen bestehen, welcher auf das Mantelrohr aufgesetzt und durch welchen der Katalysatorträgerkörper mit den Distanzhaltern in das Mantelrohr eingeschoben wird, während entlang der Außenseite des Katalysatorträgerkörpers rieselfähiges Material in den Zwischenraum rieselt. Zum Schluß wird der Katalysatorträgerkörper mit einem Einlaufkonus fügetechnisch verbunden, wobei vorzugsweise der vorderste Distanzhalter mit in die Verbindung einbezogen wird, wodurch die Anzahl der notwendigen Verfahrensschritte minimiert wird. Natürlich kann die Verbindung eines Distanzhalters mit dem Mantelrohr auch in einem getrennten Arbeitsgang erfolgen.

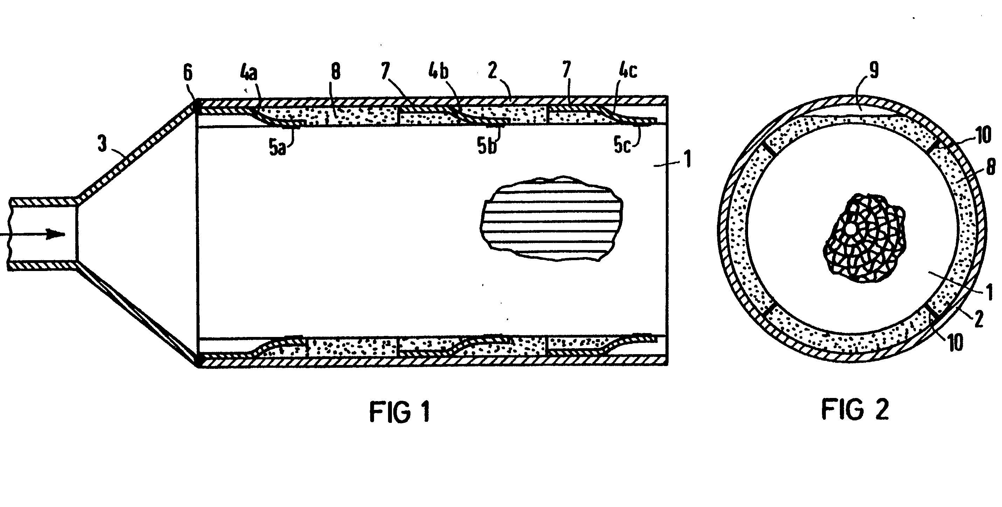

Ausführungsbeispiele der Erfindung sind in der Zeichnung dargestellt, und zwar zeigen Figur 1 einen Längsschnitt durch eine erfindungsgemäße Halterung eines Abgaskatalysatorträgerkörpers und Figur 2 einen Querschnitt durch die Halterung.

In Figur 1 ist ein üblicher metallischer Abgaskatalysator trägerkörper 1 in einem Mantelrohr 2 befestigt. Durch einen Einlaufkonus 3 gelangt das Abgas zum Katalysatorträgerkörper 1 und durchströmt diesen durch dessen zahlreiche Kanäle, Die Verbindung zwischen Abgaskatalysatorträgerkörper 1 und dem Mantelrohr 2 wird durch drei kragenförmige Distanzhalter 4a, 4b, 4c hergestellt, Diese Distanzhalter 4a, 4b, 4c sind mittels geeigneter fügetechnischer Verbindungen 5a, 5b, 5c auf der äußeren Lage des Katalysatorträgerkörpers 1 befestigt. Der vorderste Distanzhalter 4a ist außerdem mit dem Mantelrohr 2 fügetechnisch 6 verbunden, wobei die Verbindung vorzugsweise an der Stelle erfolgt, an der auch der Einlaufkonus 3 mit dem Mantelrohr 2 verbunden ist. Die anderen Distanzhalter 4b, 4c sind am Mantelrohr 2 nicht befestigt, sondern gleiten mit einer Dichtfläche 7 an diesem entlang.

Der Zwischenraum 8 zwischen Mantelrohr 2 und Katalysatorträgerkörper 1 ist mit einem hochtemperaturfesten, wärmeisolierenden, rieselfähigen Material, z.B. Quarzsand, möglichst weitgehend ausgefüllt. Dieses Material rüttelt sich beim Betrieb des Katalysators immer wieder fest, selbst wenn der metallische Katalysatorträgerkörper Dehnungen oder sonstige Bewegungen ausführt. Sollte sich das Volumen des Zwischenraumes vergrößern, so rieselt das rieselförmige Material, wie in Figur 2 dargestellt, doch im allgemeinen nach unten, so daß oben ein Hohlraum 9 entsteht. Trotzdem bewirkt das rieselfähige Material immer noch eine erhebliche Dämpfung der Bewegungen des Katalysatorträgerkörpers 1 gegenüber dem Mantelrohr 2. Falls nötig, können, wie ebenfalls in Figur 2 dargestellt, zusätzliche radial und in Längsrichtung des Katalysatorträgerkörpers 1 verlaufende Stege 10 in den Zwischenraum 8 angeordnet werden, welche den Zwischenraum in mehrere Kammern unterteilen, so daß eine Verschiebung des Katalysatorträgerkörpers 1 aus seiner zentralen Lage heraus erschwert wird. Die Stege 10 dürfen jedoch nicht als feste Verbindung zwischen Katalysatorträgerkörper 1 und Mantelrohr 2 ausgebildet sein.

Die nicht maßstäbliche Zeichnung ist so zu verstehen daß der Zwischenraum 8 nur wenige Millimeter beträgt und so schmal gehalten ist, wie es die Anforderungen an die Wärmeisolierung und die Anordnung der Distanzhalter 4a, 4b, 4c erlauben. Die Distanzhalter 4a, 4b, 4c selbst bestehen aus möglichst dünnen Blechen in der Größenordnung von etwa 0,1 mm. Die Distanzhalter 4a, 4b, 4c bilden nur schwache Wärmebrücken zwischen Katalysatorträgerkörper 1 und Mantelrohr 2 , während das rieselfähige Material im Zwischenraum 8 eine gute Wärmeisolierung darstellt. Ein erfindungsgemäß gehalterter Katalysatorträgerkörper benötigt daher keine oder nur eine geringe Wärmeisolierung gegenüber herkömmlichen Typen mit direkt an dem Katalysatorträgerkörper anliegendem Mantelrohr und ermöglicht ein schnelleres Anspringen des Katalysators.

Erfindungsgemäß gehalterte Katalysatorträgerkörper eignen sich sowohl für einen motornahen Einbau wie auch für den Einbau unterhalb der Bodenwanne von Kraftfahrzeugen.

## Patentansprüche

1. Halterung eines metallischen Abgaskatalysatorträgerkörpers (1) in einem Mantelrohr (2), in welchem der Katalysatorträgerkörper (1) so eingebettet bzw. befestigt ist, daß seine Längendehnung nicht behindert ist, dadurch gekennzeichnet, daß die Halterung mittels Distanzhaltern (4a, 4b, 4c) ausgebildet ist, wobei der Katalysatorträgerkörper (1) mittels zweier oder mehrerer, in Umfangsrichtung verlaufender und zumindest in Teilbereichen (5a, 5b, 5c; 6, 7) am Mantelrohr (2) und am Katalysatorträgerkörper (1) anliegender, vorzugsweise kragenförmiger, Distanzhalter (4a, 4b, 4c) innerhalb des Mantelrohres (2) in einem Abstand von einigen Millimetern, vorzugsweise 1-5 mm, gehaltert ist, wobei nur 1 Distanzhalter (4a) sowohl mit dem Katalysatorträgerkörper (1) als auch mit dem Mantelrohr (2) fest verbunden (5a bzw. 6) ist.

2. Halterung nach Anspruch 1, dadurch gekennzeichnet, daß der Zwischenraum (8) zwischen Mantelrohr (2) und Katalysatorträgerkörper (1) ganz oder teilweise mit einem hochtemperaturfesten Wärmeisoliermaterial ausgefüllt ist.

3. Halterung nach Anspruch 2, dadurch gekennzeichnet, daß das hochtemperaturfeste Wärmeisoliermaterial ein keramisches Fasermaterial, z.B. in Form einer Fasermatte, ist.

4. Halterung nach Anspruch 2, dadurch gekennzeichnet, daß das Wärmeisoliermaterial ein rieselfähiges, hochtemperaturfestes Granulat oder Pulver, z.B. feiner Quarzsand oder dergleichen, ist.

5. Halterung nach Anspruch 1 und 4, dadurch gekennzeichnet, daß die Distanzhalter (4b, 4c), die nur entweder mit dem Katalysatorträgerkörper (1) oder mit dem Mantelrohr (2) fest verbunden sind, so ausgebildet sind, daß sie wie Dichtlippen wirken und auch bei Längenausdehnungen des Katalysatorträgerkörpers (1) kein Granulat oder Pulver entweichen lassen.

6. Halterung nach Anspruch 4 oder 5, dadurch gekennzeichnet, daß in dem Zwischenraum (8) etwa radiale und in Längsrichtung des Katalysatorträgerkörpers (1) verlaufende Stege (10) angeordnet sind, die den Zwischenraum (8) in mehrere in Umfangsrichtung nebeneinanderliegende Kammern unterteilen, jedoch nicht als feste Verbindungen zwischen Katalysatorträgerkörper (1) und Mantelrohr (2) ausgebildet sind.

7. Halterung nach Anspruch 5, 7, 9, 10 oder 11, dadurch gekennzeichnet, daß die Distanzhalter (4a, 4b, 4c) und/oder die Stege (10) aus metallischem Siebgewebe bestehen.

8. Verfahren zur Herstellung eines gemäß Anspruch 1, 4, 5, 6 oder 7 gehalterten Katalysatorträgerkörpers (1), gekennzeichnet durch folgende Merkmale:

a) Auf den Katalysatorträgerkörper (1) werden zwei oder mehr kragenförmige Distanzhalter (4a, 4b, 4c) aufgeschoben und an diesem befestigt (5a, 5b, 5c), vorzugsweise durch Löten oder Schweißen.

b) Der Katalysatorträgerkörper (1) mit den Distanzhaltern (4a, 4b, 4c) wird in ein Mantelrohr (2) geschoben, wobei gleichzeitig durch eine Rieselvorrichtung der Zwischenraum (8) zwischen Katalysatorträgerkörper (1) und Mantelrohr (2) mit einem rieselfähigen, hochtemperaturfesten Granulat oder Pulver gefüllt wird.

c) Das Mantelrohr (2) wird mit einem Einlaufkonus (3) fügetechisch verbunden, wobei vorzugsweise der vorderste Distanzhalter (4a) mit in die Verbindung (6) einbezogen wird, sofern nicht dieser (4a) oder ein anderer Distanzhalter (4b, 4c) in einem getrennten Arbeitsgang mit dem Mantelrohr verbunden wird.

## Revendications

1. Dispositif de montage d'un support métallique de catalyseur (1) pour des gaz d'échappement dans un tube-enveloppe (2), dans lequel le support de catalyseur (1) est inséré ou est fixé de façon à ne pas gêner sa dilatation longitudinale, caractérisé en ce que le dispositif de fixation est constitué au moyen d'entretoises (4a, 4b, 4c), le support de catalyseur (1) étant maintenu, au moyen de deux ou de plusieurs entretoises (4a, 4b, 4c), de préférence en forme de collets, s'étendant dans la direction périphérique et s'appliquant au moins dans des régions partielles (5a, 5b, 5c; 6, 7) au tube-enveloppe (2) et au support de catalyseur (1), à une distance de quelques millimètres, de préférence de 1 à 5 mm dans le tube-enveloppe (2), seule une entretoise (4a) étant reliée rigidement (5a et 6) à la fois au support de catalyseur (1) et au tube-enveloppe (2).

2. Dispositif de montage suivant la revendication 1, caractérisé en ce que l'intervalle (8) entre le tube-enveloppe (2) et le support de catalyseur (1) est empli en tout ou en partie d'un matériau thermiquement isolant et résistant à une température élevée.

3. Dispositif de montage suivant la revendication 2, caractérisé en ce que le matériau thermiquement isolant et résistant à une température élevée, est un matériau céramique fibreux, par exemple sous la forme d'une matte de fibre.

4. Dispositif de montage suivant la revendication 2, caractérisé en ce que le matériau thermiquement isolant est un granulé ou une poudre, par exemple du sable quartzeux fin ou un produit analogue, susceptible de ruisseler et résistant à une température élevée.

5. Dispositif de montage suivant la revendication 1 ou 4, caractérisé en ce que les entretoises (4b, 4c), qui ne sont reliées rigidement qu'au support de catalyseur (1) ou qu'au tube-enveloppe (2), sont telles qu'elles agissant comme des lèvres d'étanchéité et ne laissent pas s'échapper de granulés ou de poudre, même dans le cas de dilatations longitudinales es du support de catalyseur (1).

6. Dispositif de montage suivant la revendication 4 ou 5, caractérisé en ce que dans l'intervalle (8) sont disposées des barrettes (10), s'étendant sensiblement radialement et dans la direction longitudinale du support de catalyseur (1), qui subdivisent l'intervalle (8) en plusieurs chambres côte à côte dans la direction périphérique, mais qui ne sont pas constituées en liaisons rigides entre le support de catalyseur (1) et le tube-enveloppe (2).

7. Dispositif de montage suivant la revendication 5, 7, 9, 10 ou 11, caractérisé en ce que les entretoises (4a, 4b, 4c) et/ou les barrettes (10) sont constituées de toile métallique.

8. Procédé de fabrication d'un support de catalyseur (1) monté suivant la revendication 1, 4, 5, 6 ou 7, remarquable par les caractéristiques suivantes:

a) Sur le support de catalyseur (1), on enfile deux ou plusieurs entretoises en forme de collets (4a, 4b, 4c) et on les fixe (5a, 5b, 5c) sur celui-ci, de préférence par brasure ou soudure.

b) On enfile le support de catalyseur (1) avec les entretoises (4a, 4b, 4c) dans un tube-enveloppe (2), tout en emplissant par un dispositif de ruissellement l'intervalle (8) entre le support de catalyseur (1) et le tube-enveloppe (2) d'un granulé ou d'une poudre susceptible de ruisseler et résistant à une température élevée.

c) On relie par la technique d'assemblage le tube-enveloppe (2) à un cône d'entrée (3), l'entretoise la plus en avant (4a) étant de préférence incluse dans la liaison (6) pour autant que cette entretoise (4a) ou une autre entretoise (4b, 4c) n'est pas reliée au tube-enveloppe par un processus opératoire distinct.

## Claims

1. A mounting of a metallic exhaust gas catalyst support body (1) in a tubular casing (2), in which the catalyst support body (1) is embedded or secured in such a manner that its longitudinal expansion is not impeded, characterised in that the mounting is designed using spacers (4a, 4b, 4c), the catalyst support body (1) being mounted within the tubular casing (2) at a distance of several millimeters, preferably 1–5 mm, by means of two or more preferably collar-shaped spacers (4a, 4b, 4c), which extend in a circumferential direction and abut against the tubular casing (2) and the catalyst support body (1) at least in partial areas (5a, 5b, 5c; 6, 7), only one spacer (4a) being rigidly connected (5a or 6) to both the catalyst support body (1) and the tubular casing (2).

2. A mounting according to claim 1, characterised in that the intermediate space (8) between tubular casing (2) and catalyst support body (1) is entirely or partially filled with a high temperature-resistant heat-insulating material.

3. A mounting according to claim 2, characterised in that the high temperature-resistant heat-insulating material is a ceramic fibre material, e.g. in the form of a fibre mat.

4. A mounting according to claim 2, characterised in that the heatinsulating material is a fluid, high-temperature resistant granulated material or powder, e.g. fine quartz sand or the like.

5. A mounting according to claim 1 and 4, characterised in that the spacers (4b, 4c), which are only rigidly connected to either the catalyst support body (1) or the tubular casing (2), are designed in such as manner that they act as sealing lips and do not allow any granulated material or powder to escape even during longitudinal expansions of the catalyst support body (1).

6. A mounting according to claim 4 or 5, characterised in that in the intermediate space (8) crosspieces (10) are arranged, which extend approximately radially and in the longitudinal direction of the catalyst support body (1), divide the intermediate space (8) into a plurality of chambers lying adjacent one another in the circumferential direction, but which are not designed as rigid connections between the catalyst support body (1) and the tubular casing (2).

7. A mounting according to claim 5, 7, 9, 10 or 11, characterised in that the spacers (4a, 4b, 4c) and/or the crosspieces (10) are formed from metallic screen cloth.

8. A method of manufacturing a catalyst support body (1) mounted according to claim 1, 4, 5, 6 or 7, characterising by the following features:

a) Two or more collar-shaped spacers (4a, 4b, 4c) are pushed onto the catalyst support body (1) and secured thereon (5a, 5b, 5c), preferably by soldering or welding.

b) The catalyst support body (1) with the spacers (4a, 4b, 4c) is pushed into a tubular casing (2), the intermediate space (8) between the catalyst support body (1) and the tubular casing (2) being simultaneously filled by means of a sprinkling device with a fluid, high temperature-resistant granulated material or powder.

c) The tubular casing (2) is connected by a joining technique to the inlet cone (3), the front-most spacer (4a) preferably being included in the connection (6), so long as said spacer (4a) or another spacer (4b, 4c) is not connected with the tubular casing in a separate working step.

FIG 1

FIG 2

EP 0 212 243 B1